**Europäisches Patentamt**

**European Patent Office**

**Office européen des brevets**

(11) Veröffentlichungsnummer : **0 129 768**
**B1**

(12) **EUROPÄISCHE PATENTSCHRIFT**

(45) Veröffentlichungstag der Patentschrift :
09.09.87

(51) Int. Cl.⁴ : **G 01 J 3/46**, G 01 N 21/86,
**B 41 F 33/00**

(21) Anmeldenummer : **84106697.0**

(22) Anmeldetag : **12.06.84**

(54) **Farbdichtemessgerät.**

(30) Priorität : **23.06.83 DE 3322665**

(43) Veröffentlichungstag der Anmeldung :
**02.01.85 Patentblatt 85/01**

(45) Bekanntmachung des Hinweises auf die Patenterteilung : **09.09.87 Patentblatt 87/37**

(84) Benannte Vertragsstaaten :
**AT CH DE FR GB IT LI**

(56) Entgegenhaltungen :
**EP-A- 0 104 477**
**DE-A- 2 130 165**
**DE-A- 2 641 130**
**DE-A- 2 642 647**
**DE-A- 3 005 087**
**DE-A- 3 218 166**

(73) Patentinhaber : **Siemens Aktiengesellschaft Berlin und München**
**Wittelsbacherplatz 2**
**D-8000 München 2 (DE)**

(72) Erfinder : **Pohl, Klaus, Dipl.-Ing.**
**Eichenring 45**
**D-8551 Röttenbach (DE)**

EP 0 129 768 B1

## Beschreibung

Die Erfindung bezieht sich auf ein Farbdichtemeßgerät zur Lieferung von Farbzoneneinstellwerten bei Druckmaschinen, mit

a) einer optischen Abtastvorrichtung für eine Druckvorlage, und

b) einer Auswerteschaltung zur Bestimmung der Farbdichtemittelwerte je Zone aus den Abtastwerten.

Mit diesem Oberbegriff wird beispielsweise auf ein Farbdichtemeßgerät Bezug genommen, wie es in der deutschen Patentschrift DE-C-26 41 130 beschrieben ist.

Um bei Produktionsbeginn von vornherein die richtige Farbdosierung entsprechend dem zu druckenden Bild zu erreichen, ist es bei einer Druckmaschine erforderlich, die Farbzonenschrauben vorher in die richtige Stellung zu bringen. Hierzu müssen anhand der jeweiligen Druckvorlage die richtigen Einstellwerte je Zone im voraus ermittelt werden. Dies geschieht mit einem Farbdichtemeßgerät, in welches die Druckvorlage eingelegt wird und das dann die Farbdichtemittelwerte je Zone errechnet.

Bei der bekannten Lösung wurde entsprechend den konstruktiven Gegebenheiten an der Druckmaschine der Gerätemeßblock in Zonen unterteilt und jede Zone je nach Größe des Formates wiederum in mehrere Segmente aufgeteilt. Je Segment ist dann eine Fotodiode vorgesehen, deren empfangener Lichtstrom vom jeweils durchgelassenen bzw. reflektierten Lichtanteil der Druckvorlage abhängig ist.

Die Meßströme der einzelnen Dioden werden dann verstärkt und mit einer Auswerteelektronik je Zone summiert. Das sich dann hieraus ergebende Spannungssignal wird zur entsprechenden Voreinstellung der Farbzonenschrauben benutzt.

Aufgrund der unterschiedlichen Maschinenarten und damit auch der vielen möglichen Formate und Zonenaufteilungen der Druckvorlagen sind die bekannten Geräte im allgemeinen nicht universell verwendbar, sondern müssen konstruktiv auf den jeweiligen Maschinentyp zugeschnitten werden. Dies erfordert eine Herstellung sehr unterschiedlicher Geräte.

Die Aufgabe der vorliegenden Erfindung besteht darin, ein Farbdichtemeßgerät zu schaffen, das universell für die verschiedensten Druckvorlagen und Maschinengegebenheiten einsetzbar ist.

Diese Aufgabe wird erfindungsgemäß durch folgende Merkmale gelöst :

c) zur optischen Abtastung der Druckvorlage dient eine Fernsehkamera mit mindestens einer Grauwertauflösung von 8 Stufen je Bildpunkt, der eine Rechnersteuerung und ein Koordinatenspeicher zugeordnet sind ;

d) der die Druckvorlage definierende Speicherbereich im Koordinatenspeicher ist vorwählbar, und

e) die Adressen der für die Erzeugung der Zonenmittelwerte jeweils zu summierenden Speicherwerte im freigegebenen Bereich des Koordinatenspeichers sind entsprechend der vorliegenden Zonenzahl und Zonenbreite rechnerseitig erzeugbar.

Auf diese Weise steht je Zone ein hochgenauer Mittelwert zur Verfügung, wobei das Gerät weder einer Anpassung hinsichtlich der Zonenbreite, der Zahl der Zonen noch der Größe der Druckvorlage bedarf, da diese Werte auf einfache Weise elektronisch berücksichtigt werden können ; es muß wegen der Geräteabmessungen bei der Verwendung der Fernsehkamera lediglich das zu messende Maximalformat bekannt sein.

Die Verwendung einer Fernsehkamera hat auch noch den Vorteil, daß Andruckexemplare im Vierfarbendruck durch Vorschwenken entsprechender Farbfilter vor die Kamera abgetastet und die entsprechenden Einstellwerte abgeleitet werden können.

Das vorstehend geschilderte Prinzip des Farbdichtemeßgerätes ist auch zur Abtastung einer laufenden Druckbahn verwendbar, wobei hier als Druckvorlage das Druckbild anzusehen ist. Mit einer Fernsehkamera läßt sich nämlich im Gegensatz zu den bisher bekannten Messungen mit traversierenden Densitometermeßköpfen die gesamte Seite auf einmal durch eine Blitztriggerung erfassen. In diesem Zusammenhang sei auch erwähnt, daß Fernsehsysteme mit automatischer Bildauswertung an sich bekannt sind (vgl. z. B. Siemens-Druckschrift 678/1 002 Videomat).

Anhand eines in der Zeichnung dargestellten Ausführungsbeispiels sei die Erfindung näher beschrieben ; es zeigen :

Figur 1 schematisch das Fernsehbild, und

Figur 2 den Aufbau des Farbdichtemeßgerätes.

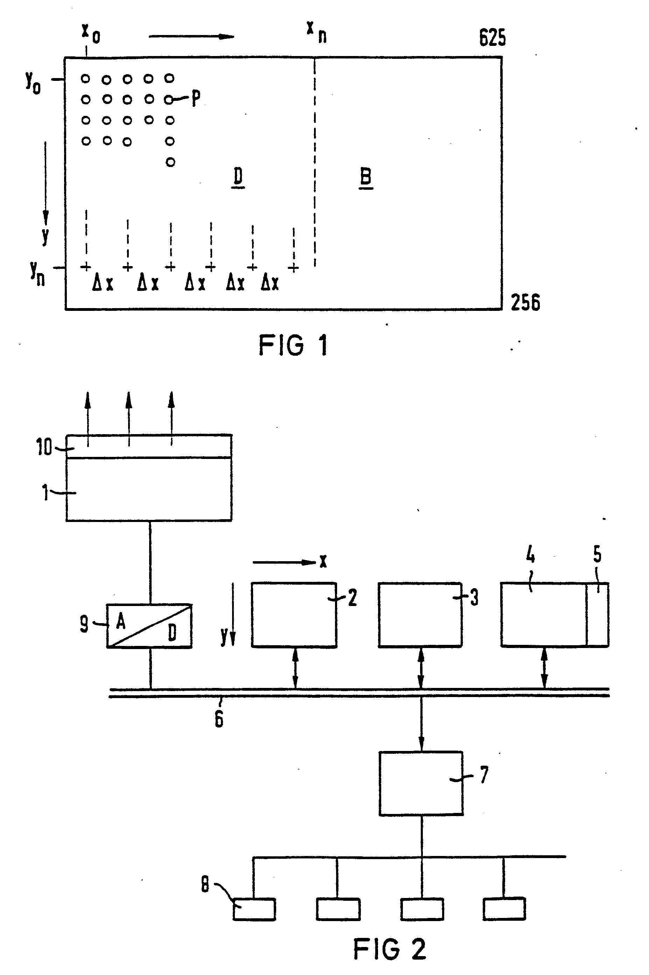

Wie aus Figur 1 ersichtlich, werden bei der Halbbildabtastung 256 Zeilen (y-Richtung) zu je 625 Bildpunkten (x-Richtung) im Halbbildverfahren abgetastet, wobei das nächste Halbbild bei der nächsten Abtastung erzeugt wird. Je Bildpunkt P sind z. B. 64 Grauwertstufen unterscheidbar. Die einzelnen Bildpunkte werden hinsichtlich ihrer Grauwerte in einem Koordinatenspeicher 2 (x, y) hinterlegt. Wie aus Figur 1 ersichtlich, umfaßt die Druckvorlage D nur einen Teil des gesamten abgetasteten Bildes B. Dieser für die Druckvorlage maßgebliche Koordinatenbereich ist beispielsweise durch die Koordinaten $x_0$, $x_n$ und $y_0$, $y_n$ bestimmt. Nur innerhalb dieses Koordinatenbereiches x, y liegende Grauwerte werden dann zur Ermittlung der Zoneneinstellwerte herangezogen ; außerhalb dieses Bereiches liegende Werte werden ausgeblendet. Wie leicht ersichtlich, kann steuerungsseitig durch entsprechende Adressengenerierung und Summation jeweils aus den gespeicherten Bildpunkten ein für eine beliebige Zone von der Breite $\Delta x$ repräsentativer Grauwert durch Summation der einzelnen Bildpunkte erzeugt werden. Da alle werte im Speicher vorliegen, ist jederzweit eine einfache Anpassung an jede Zonenzahl und Zonenbreite möglich.

Wie aus dem schematischen Schaltbild nach Figur 2 zu ersehen ist, ist eine Fernsehkamera 1 mit vorschwenkbarem Farbfilter 10 vorgesehen, deren analoges Signal über einen Analog-Digital-Wandler 9 in ein Digitalsignal wandelbar ist. Zur Datenkomprimierung und Reduzierung können dabei in diesem Wandler 9 auch jeweils acht Bildpunkte zusammengefaßt und nur der Mittelwert als digitalisierter Wert weitergegeben werden. Die durch die Kamera gewonnenen Abtastwerte werden über das Bussystem 6 eine Mikrocomputersystems 3 in einen Koordinatenspeicher 2 gegeben. In diesem Speicher ist dann koordinatenmäßig (x, y) das in Figur 1 gezeigte Halbbild speichermäßig hinterlegt, wobei noch ein zusätzlicher Speicher für das zweite Halbbild vorgesehen werden kann. Ebenfalls vorgesehen, aber nicht näher dargestellt, sind weitere Bauelemente, wie z. B. Hintergrundspeicher usw. Das Mikrocomputersystem 3 errechnet nun entsprechend den vorgegebenen Bereichsgrenzen im Koordinatenspeicher 2 und entsprechend der gewünschten Zonenzahl und Zonenbreite die einzelnen Zoneneinstellwerte und gibt diese an eine Anzeige 4 und ein Bedienfeld 5. Durch dieses Bedienfeld 5 sind u. a. die Zonenzahl, Zonenbreite und der auszuwertende Druckvorlagenbereich voreinstellbar.

Die ermittelten Zonenmittelwerte können auch direkt über eine Datenschnittstelle 7 als Sollwerte zu den einzelnen Farbzonenregelkreisen 8 der Druckmaschine gehen.

**Patentansprüche**

1. Farbdichtemeßgerät zur Lieferung von Farbzoneneinstellwerten bei Druckmaschinen, mit
a) einer optischen Abtastvorrichtung für eine Druckvorlage, und
b) einer Auswerteschaltung zur Bestimmung der Farbdichtemittelwerte je Zone aus den Abtastwerten,
gekennzeichnet durch folgende Merkmale :
c) zur optischen Abtastung der Druckvorlage dient eine Fernsehkamera (1) mit mindestens einer Grauwertauflösung von 8 Stufen je Bildpunkt, der eine Rechnersteuerung (3) und ein Koordinatenspeicher (2) zugeordnet sind ;
d) der die Druckvorlage definierende Speicherbereich im Koordinatenspeicher ist vorwählbar ;
e) die Adressen der für die Erzeugung der Zonenmittelwerte jeweils zu summierenden Speicherwerte im freigegebenen Bereich des Koordinatenspeichers sind entsprechend der vorliegenden Zonenzahl und Zonenbreite rechnerseitig selbsttätig auswählbar und die Speicherwerte addierbar.

2. Farbdichtemeßgerät nach Anspruch 1, dadurch gekennzeichnet, daß der Fernsehkamera (1) unterschiedliche Farbfilter (10) vorschwenkbar sind.

3. Farbdichtemeßgerät nach Anspruch 1 zur Messung an einer laufenden bedruckten Bahn, gekennzeichnet durch eine Blitztriggerung des Druckbildes bei der Abtastung.

**Claims**

1. A colour density measuring device which serves to supply colour zone adjustment values for printers, comprising
a) an optional scanning device for a print master
b) an analysis circuit which determines the colour density mean values for each zone from the scan values,
characterised by the following features :
c) the optical scanning of the print master is carried out by a television camera (1) which has at least a grey value resolution of 8 stages per image point and which is assigned a computer control unit (3) and a coordinate store (2) ;
d) the storage zone in the coordinate store which defines the print master is pre-selectable ;
e) the addresses of the stored values in the released zone of the coordinate store, which are to be added in order to produce the zone mean values, can be automatically selected in accordance with the current zone number and zone breadth and the stored values can be added.

2. A colour density measuring device as claimed in claim 1, characterised in that different colour filters (10) can be pivoted in front of the television camera (1).

3. A colour density measuring device as claimed in claim 1, for carrying out measurements on a moving printed web, characterised by a flash trigger of the printed image in the scanning process.

**Revendications**

1. Appareil de mesure de la densité de couleur, servant à délivrer des valeurs de réglage de zones en couleurs dans des machines d'impression, comportant
a) un dispositif d'exploration optique pour un modèle d'impression, et
b) un circuit d'évaluation servant à déterminer les valeurs moyennes de la densité de couleur pour chaque zone, à partir des valeurs d'exploration,
caractérisé par les caractéristiques suivantes :
c) pour l'exploration optique du modèle d'impression, on utilise une caméra de télévision (1) comportant au moins une résolution des valeurs de gris de 8 échelons pour chaque point image et à laquelle sont associés un dispositif (3) de commande par calculateur et une mémoire de coordonnées (2) ;
d) la partie qui définit le modèle d'impression, dans la mémoire de coordonnées peut être présélectionnée ;
e) des adresses des valeurs, qui doivent être respectivement additionnées pour fournir les valeurs moyennes des zones et sont contenues dans la partie libérée de la mémoire de coordonnées, peuvent être sélectionnées de façon automatique dans le calculateur conformément au nombre présent de zones et à la largeur présente des zones, et les valeurs de la mémoire peuvent être additionnées.

2. Appareil de mesure de la densité de couleur suivant la revendication 1, caractérisé par le fait que différents filtres colorés (10) peuvent être amenés par pivotement devant la caméra de télévision (1).

3. Appareil de mesure de la densité de couleur suivant la revendication 1, pour l'exécution d'une mesure sur une piste imprimée continue, caractérisé par la détection de l'épreuve au moyen du déclenchement d'un éclair lors de l'exploration.

FIG 1

FIG 2